## Europäisches Patentamt
## European Patent Office
## Office européen des brevets

(19)

(11) Veröffentlichungsnummer: **0 184 883**
**A2**

(12) # EUROPÄISCHE PATENTANMELDUNG

(21) Anmeldenummer: **85201951.2**

(22) Anmeldetag: **26.11.85**

(51) Int. Cl.⁴: **H 04 M 3/22**

(30) Priorität: **11.12.84 DE 3445030**

(43) Veröffentlichungstag der Anmeldung: **18.06.86**
Patentblatt **86/25**

(84) Benannte Vertragsstaaten: **CH DE FR LI**

(71) Anmelder: **Philips Patentverwaltung GmbH,
Bilistrasse 80, D-2000 Hamburg 28 (DE)**
(84) Benannte Vertragsstaaten: **DE**

(71) Anmelder: **N.V. Philips' Gloeilampenfabrieken,
Groenewoudseweg 1, NL-5621 BA Eindhoven (NL)**
(84) Benannte Vertragsstaaten: **CH FR LI**

(72) Erfinder: **Lehnert, Ralf, Dr.-Ing., Am Nordhang 15,
D-8501 Kalchreuth (DE)**
Erfinder: **Tran-Gia, Phuoc, Dr.-Ing., Parkäckerstrasse 14,
D-7120 Bietigheim-Bissingen (DE)**
Erfinder: **Lemppenau, Wolfram, Dipl.-Ing.,
Kappelbergstrasse 40/1, D-7000 Stuttgart 50 (DE)**

(74) Vertreter: **Dreykorn-Lindner, Werner et al, Philips
Patentverwaltung GmbH
Postfach 10 51 49 Bilistrasse 80,
D-2000 Hamburg 28 (DE)**

(54) Verkehrssimulationseinrichtung zum Testen von Vermittlungsanlagen unter Berücksichtigung der Teilnehmer-System-Interaktion.

(57) Mit Hilfe von Verkehrssimulationseinrichtungen können Vermittlungsanlagen getestet werden, wobei diese die Verkehrsumwelt der Vermittlungsanlage nachbilden. Hierzu enthalten die Verkehrssimulationseinrichtungen neben Teilnehmer- und/oder Leitungsnachbildungen eine mit diesen verbundene programmgesteuerte Steuereinrichtung, welche Zufallsvariable — wie Anrufabstände, Gesprächsdauern und Reaktionszeiten — erzeugt, den Testablauf steuert und die Reaktionen der Vermittlungsanlage überprüft, sowie die vermittlungstechnischen Parameter misst. Um ein wirklichkeitsnahes Abbild der Verkehrsumwelt zu erhalten, ist eine Vielzahl von Teilnehmer- und/oder Leitungsnachbildungen erforderlich.

Diese vielfähige Verkehrsumwelt kann wirklichkeitsnah realisiert werden, wenn das Verhalten der angeschlossenen Teilnehmer- und/oder Leitungsnachbildungen in Abhängigkeit von der Reaktion der Vermittlungsanlage veränderbar ist. Anhand der Reaktion der Vermittlungsanlage (Signalisierung eines Ereignisses) wird durch Verknüpfung mit Zufallsvariablen und Ereignis-Zeitpunkten eine wirklichkeitsnahe Abbildung der externen Umwelt der Vermittlungsanlage erreicht.

Philips Patentverwaltung GmbH  PHD 84 338 EP

N.V. Philips'Gloeilampenfabrieken  25.09.1985

Verkehrssimulationseinrichtung zum Testen von
Vermittlungsanlagen unter Berücksichtigung der
Teilnehmer-System-Interaktion

Die Erfindung betrifft eine Verkehrssimulationseinrichtung zum Testen von Vermittlungsanlagen gemäß dem Oberbegriff des Patentanspruchs 1.

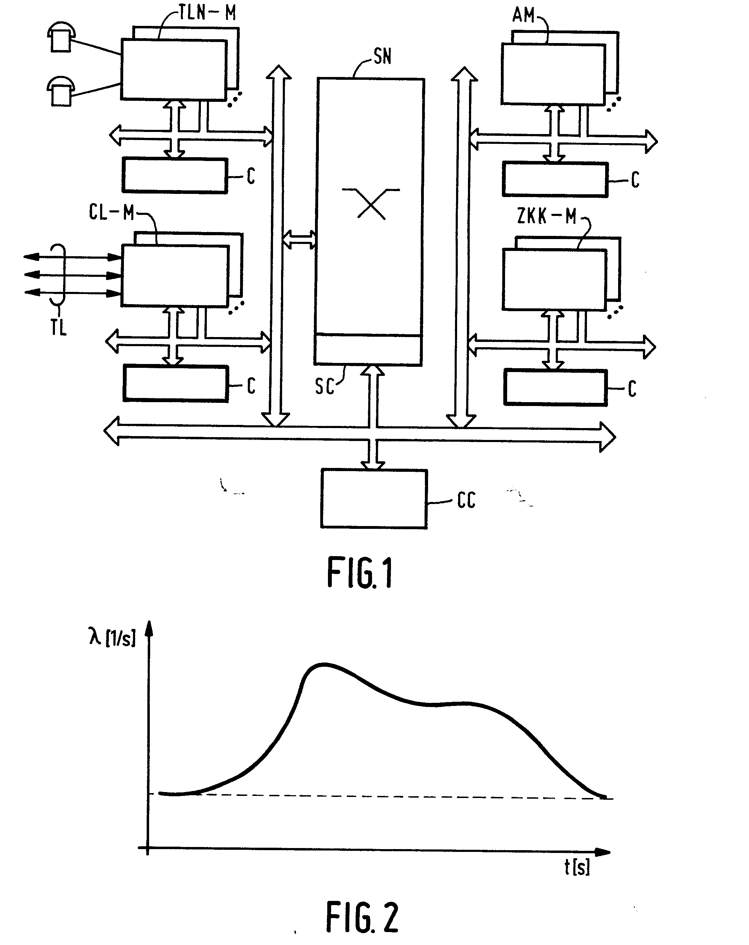

Rechnergesteuerte Vermittlungsanlagen bestehen im
allgemeinen aus einem oder mehreren ein- oder
mehrstufigen Koppelnetzen, einer speicherprogrammierten zentralen und/oder mehreren dezentralen
Steuereinheiten und Anpassungseinheiten, welche
die Steuereinheiten mit den Koppelnetzen verbinden. Weiterhin enthält eine solche Vermittlungsanlage Sender und Empfänger für Signalisierinformationen, periphere Steuereinheiten und weitere Peripheriegeräte. Die Vermittlungsanlage empfängt
und beantwortet die Anreize, die ihr von ihrer externen Umwelt, d.h. von ihren Anschlüssen, z.B.
Teilnehmerleitungen, oder Verbindungsleitungen
übermittelt werden (siehe Fig. 1).

- 2 -

Mittels einer Verkehrssimulationseinrichtung wird ein Modell, d.h. eine funktionale Nachbildung der externen Umwelt (Peripherie), erstellt und das Verhalten der Vermittlungsanlage bei realistischen Verkehrsverhältnissen aufgezeichnet. Die externen Ereignisse, wie z.B. Belegung auf Teilnehmerleitungen oder Verbindungsleitungen, Wählen der Ziffern, Abheben des gerufenen Teilnehmers, die ausserhalb der Vermittlungsanlage entstehen, werden dabei durch Ereignismuster, welche die Folge der Ereignisse und Zeiten, zu denen die Ereignisse eintreten müssen, festgelegt. Diese Ereignisfolgen werden in der Verkehrssimulationseinrichtung erzeugt, wobei deren Spektrum von einfachen deterministisch festgelegten bis hin zu zufallsabhängigen Ereignismustern reichen. Das Ereignismuster wird dabei durch die Ereignisfolgen aller in einer Simulation vorkommenden Belegungstypen festgelegt. Dadurch, daß die externen Ereignisse durch Ereignismuster beschrieben werden können, können praktisch alle Einzelheiten der echten Belegung berücksichtigt werden.

Mit einer solchen Verkehrssimulationseinrichtung können beispielsweise Belegungsphasen wie Abheben des rufenden Teilnehmers, Belegung eines Verbindungssatzes, Warten auf Wählton, Wählphase, Signalisierung, Durchschaltung, Rufen des gewünschten Teilnehmers, Abheben des gerufenen Teilnehmers, Auslösung usw. beschrieben und simuliert werden. Dieser zusammengesetzte Ablauf des Vermittlungsprozesses ist dadurch gekennzeichnet, daß zur Fortsetzung des Vermittlungsprozesses neue Daten erforderlich sind, die von äußeren Informationsquellen zu willkürlichen Zeitpunkten beigesteuert werden. Diese während des Vermittlungsprozesses auftretenden neuen Daten, welche als Eingangsinformation für die Fortsetzung des Prozesses gebraucht werden, werden in Pufferspeichern niedergelegt. Beispielsweise ist die Wählphase dadurch gekennzeichnet, daß diese sich aus einer Anzahl von Impulsen von vorgegebener Dauer (Ziffer) zusammensetzt, wobei die Zeitintervalle zwischen den Impulsen (Ziffern) beispielsweise einer vorgegebenen Verteilung folgen.

Durch die verschiedenen Ereignismuster kann nun die Darstellung aller Arten von unvollständigen Belegungen, wie z.B. Belegungen mit unvollständiger Wahl, gerufener Teilnehmer besetzt, keine Antwort usw. oder Belegungen von und zu speziellen Anschlüssen, wie z.B. Nebenstellenanlagen, Anschlüssen mit Tastwahlstation, Kurzwahl, Besucherschaltung und weitere Leistungsmerkmale der Vermittlungsanlage simuliert werden. Das Ereignismuster bildet dabei nicht nur sämtliche Einzelereignisse nach, sondern ist auch von der Korrelation zwischen dem Auftreten des Ereignisses und dessen zeitlichem Eintreffen in der Vermittlungsanlage geprägt. Die Zeitabstände zwischen den Ereignissen eines jeden Belegungstyps können entsprechend speziellen für den Anwendungsfall der Vermittlungsanlage gültigen Verteilungsgesetzen ausgewählt werden. Die Wahl der Verteilungsfunktion beruht auf statistischen Untersuchungen, wobei die zugrundeliegenden Meßergebnisse durch Beobachtungen und
Auswertung des Fernsprechverkehrs gewonnen werden.

Mittels der Verkehrssimulationseinrichtung sollte
die Untersuchung des Systemverhaltens einer beliebigen Vermittlungsanlage, d.h. einer Fernsprech-,
oder Datenvermittlungsanlage, für den öffentlichen
oder privaten (Nebenstellen-) Bereich, hinsichtlich deren Leistungs- und Funktionsfähigkeit, bei
dem Auf- und Abbau einer Einzelverbindung bis hin
zu beispielsweise Tausend parallel aktiven Fernsprech- und/oder Datenverbindungen, durch Simulation des Verhaltens der an sie angeschlossenen
Teilnehmer oder Simulation von beliebigen Verbindungsleitungen durchführbar sein. Eine solche Verkehrssimulationseinrichtung kann dann für die Untersuchung der Leistungsfähigkeit der Vermittlungsanlage hinsichtlich Verkehrsabwicklung und
Vermittlungsbetrieb, die Ermittlung der Software-
Leistungsfähigkeit unter Lastbedingungen, die
Überprüfung von Überlastabwehrstrategien, die Untersuchung des Verhaltens eines oder mehrerer
Steuerrechner (Steuereinheiten) bei kurzzeitigen
Verkehrsspitzen usw. benutzt werden.

Bei der Entwicklung und bei der Herstellung des
Prototyps einer Vermittlungsanlage (Fernsprech-,
oder Datenvermittlungsanlage) ist die Ermittlung
von vermittlungstechnischen Parametern (Meßgrößen,
z.B. Wähltonverzug, Ruftonverzug usw.) notwendig,
um den entwickelten Prototyp auf seine Systemeigenschaften untersuchen zu können und um bei Entwurfsänderungen deren Auswirkungen auf die nicht veränderten Teile des Gesamtsystems feststellen zu können. Mit Hilfe dieser vermittlungstechnischen Parameter (Meßwerte) kann dann bei der Übergabe an den Auftraggeber die Einhaltung der von diesem aufgestellten Forderungen bezüglich der Systemeigenschaften (welche im Pflichtenheft festgehalten sind) nachgewiesen werden.

Aus der DE-PS 32 12 019 ist ein Verfahren für eine Einrichtung zur Verkehrssimulation in Fernsprechvermittlungsanlagen bekannt, mit der das Verhalten der Teilnehmer der Fernsprechvermittlungsanlage durch automatisch gesteuerte Teilnehmernachbildungen simuliert werden kann. Mit Hilfe der Teilnehmernachbildungen werden, gesteuert durch eine Steuerrechnereinheit, Verbindungen auf- und abgebaut und dabei die Reaktion der jeweiligen Vermittlungsanlage überprüft. Der Gesamtablauf einer Verbindung, welche zwischen zwei Teilnehmernachbildungen hergestellt werden soll, ist als deterministisch festgelegte Befehlsfolge in einem Speicher abgelegt und enthält zumindest an den üblicherweise von der Reaktion der Teilnehmer abhängigen Zeitpunkten jeweils Pausen. Zur Erzeugung eines zufallsabhängigen Teilnehmerverhaltens während eines fest vorgegebenen (programmierten) Funktionsablaufs werden Pausenzeiten mittels Zufallsgeneratoren statistisch verteilt vorgegeben. Beim Funktionstest der in Serienfertigung hergestellten Vermittlungsanlage werden die jeweils gemessenen Parameter mit einem Gutmuster (z.B. vorgegeben durch am Prototyp vorgenommene Messungen) verglichen. Bei Abweichungen zwischen gemessenen Parametern der hergestellten Vermittlungsanlage und vorgegebenen Parametern aus Gutmustern wird eine entsprechende Fehlermeldung ausgegeben und der festgestellte Fehler behoben. Damit kann die Einhaltung geforderter Systemparameter und Systemeigenschaften bezüglich den Auf- und Abbau einer Einzelverbindung überprüft werden.

Bei dem aus der DE-PS 32 12 019 bekannten Verfahren werden zur Überprüfung der Hard- und Software der Vermittlungsanlage Teilnehmernachbildungen verwendet. Die Teilnehmernachbildungen erzeugen die an das Vermittlungssystem gerichteten Anreize jeweils einzeln oder gruppenweise und die entsprechenden Systemreaktionen werden mit einem Gutmuster verglichen. Die einem einzelnen Teilnehmer zugeordneten Anreize sind hierbei je nach dem gewünschten Funktionsablauf (Prüfablauf) in ihrer zeitlichen Reihenfolge und in ihrem Zeitpunkt des Auftretens fest vorgegeben. Beim Vergleich mit dem Gutmuster wird im Fehlerfall die Fehlermeldung protokolliert (und evtl. der Test abgebrochen); bei Übereinstimmung der jeweils gemessenen Parameter mit dem Gutmuster werden die einem Teilnehmer bzw. einer Leitung zugeordneten Anreize nach genau demselben Prüfablauf periodisch wiederholt.

Bei dem aus der DE-PS 32 12 019 bekannten Verfahren sind alle Anreize während des Prüfablaufs in ihrer Art und ihrem Zeitpunkt vor dem Beginn des Tests vorgegeben. Zum Beispiel sind die zu wählende Ziffer des gerufenen Teilnehmers (B-Tln); die Festlegung, daß nur der rufende Teilnehmer (A-Tln) oder nur der B-Tln das Gespräch beendet; die Festlegung, daß die Gesprächsverbindung sofort nach erkanntem, erfolgreichem Gesprächsaufbau durchzuführen ist; daß der zeitliche Abstand zwischen zwei Ereigniszeitpunkten nur bei einem Teil aller möglichen Zeitabschnitte in eingeschränktem Ausmaß statistischen Gesetzen genügt; abgespeichert. Bekannte Prüfeinrichtungen, wie z.B. ein aus der DT-AS 24 20 773 bekannter Anrufsimulator oder eine aus der DE-PS 32 15 672 bekannte Prüfeinrichtung beziehen sich lediglich auf eine physikalische Überwachung der aufzubauenden Verbindung.

Die bekannten Testverfahren (DE-PS 32 12 019, DT-AS 24 20 773, DE-PS 32 15 672) haben den Nachteil, daß sie die physikalischen und logischen Systemeigenschaften nur bei wenigen gleichzeitig bestehenden Verbindungen testen können. Diese Systemeigenschaften (Reaktionen) verändern sich jedoch, wenn die Vermittlungsanlage bei maximalen Systemausbau mit Nenn- oder Überlast und realem Teilnehmerverhalten beaufschlagt wird.

Unter Nennlast soll der Fall des maximal möglichen Systemausbaus (d.h. maximaler Leitungsausbau und/ oder maximale Anzahl von angeschlossenen Teilnehmern) und einem Verkehrsangebot von typisch A = 0,1 Erl je Teilnehmer und A = 0,8 Erl je Leitung verstanden werden. Diese Verkehrsangebots-Werte verändern sich im großen Maße während des Tagesverlaufs in den sogenannten Hauptverkehrsstunden oder zu besonderen Zeiten (Katastrophenfälle). Zusätzlich können für die Funktionsfähigkeit des Systems kritische, kurzzeitige Überlastspitzen auftreten. Neben einem erhöhten Verkehrsangebot und der damit erhöhten Ankunftsrate verändert sich auch das sogenannte Teilnehmerverhalten.

Unter Teilnehmerverhalten soll hierbei verstanden werden, daß der Teilnehmer nervös oder ungeduldig wird, wenn die Verbindung nicht seiner Erwartung entsprechend aufgebaut wird, was sich z.B. durch eine Erhöhung der Anzahl von Rufwiederholungen bemerkbar macht, oder daß während des Verbindungsaufbaus vom Regelfall abweichende Entscheidungen (z.B. vorzeitiger Wahlabbruch) getroffen werden. Diese Rufwiederholungen bewirken Anreize für das System, ohne daß sich auf das einzelne Gespräch bezogen, ein erfolgreicher Verbindungsaufbau feststellen läßt.

Diese unterschiedlichen Effekte hinsichtlich der Verkehrscharakteristika werden bei den bekannten Testverfahren nicht berücksichtigt. Die so entstehenden Verkehrsströme lassen sich bei der Modellbildung eines Teilnehmers oder einer beliebig großen Teilnehmergruppe (Nachbildung der Verkehrsumwelt) mit folgenden Angebotsfunktionen darstellen:

|              | endliche Quellenzahl | unendliche Quellenzahl |
|--------------|----------------------|------------------------|
| stationär    | $\alpha$ /Tln        | $\lambda$              |
| instationär  | $\alpha(t)$/Tln      | $\lambda(t)$           |

Der Erfindung liegt die Aufgabe zugrunde, eine Verkehrssimulationseinrichtung anzugeben, mit der eine wirklichkeitsnahe Nachbildung der Verkehrsumwelt der Vermittlungsanlage ermöglicht wird.

Diese Aufgabe wird durch die im Patentanspruch 1 angegebenen Merkmale gelöst.

Die erfindungsgemäße Verkehrssimulationseinrichtung weist den Vorteil auf, daß die Simulation realistischen Teilnehmerverhaltens ermöglicht wird. Während bei bisherigen Verkehrssimulationseinrichtungen für die Speicherung der Vielfalt von unterschiedlichen Ereignismustern (alle nur denkbaren Teilnehmerverhalten) ein hoher Speicheraufwand erforderlich war, kann ein neues Teilnehmerverhalten nun dadurch erzeugt werden, daß ausgehend von einer bestimmten Stelle im Programmablauf für ein bestimmtes Teilnehmerverhalten nun zu einer weiteren Stelle in das Programm eines anderen Teilnehmerverhaltens verzweigt werden kann und der Gesamtprogrammablauf somit ein neues Teilnehmerverhalten ergibt. Dadurch ist eine einfache Veränderung des Teilnehmerverhaltens in Abhängigkeit von der Reaktion der Vermittlungsanlage möglich. Mit der erfindungsgemäßen Verkehrssimulationseinrichtung kann die Verkehrssimulation aller an eine Vermittlungsstelle anschließbaren Fernsprech- und/oder Dateneinrichtungen und/oder Leitungen unter der Berücksichtigung der Systemrückwirkung auf das zu simulierende Teilnehmerverhalten durchgeführt werden und die entsprechenden Systemreaktionen unter jeder möglichen Lastsituation (d.h. für Nenn- oder Überlastfall) bei konstanter ( $\lambda$ = konstant) und/oder zeitabhängiger ( $\lambda$ = $\lambda$ (t)) Ankunftsrate gemessen, protokolliert und ausgewertet werden.

Die Ausbildung der Teilnehmernachbildung (wobei unter Teilnehmernachbildung alle verschiedenen Typen von Anschlüssen z.B. Fernsprechleitung, Datenleitung verstanden werden soll) gemäß Patentanspruch 2 führt dazu, daß jede Teilnehmernachbildung über ein sogenanntes Teilnehmer-Gedächtnis verfügt und daß ein eigenes Teilnehmerverhalten vorgebbar ist. Die Vielfalt von unterschiedlichen Teilnehmerverhalten ergibt sich durch die Nachbildung aller denkbaren Aktionen eines realen Teilnehmers zu allen Zeitpunkten an der diesen zugeordneten Systemschnittstelle, welche je nach durchzuführender Teilnehmeraktion oder Systemreaktion zufallsabhängig ausgeführt wird. Diese Entscheidungen können

- aufgrund deterministisch vorgebbarer Größen
- zufallsabhängig entsprechend vorgebbaren beliebigen Verteilungsfunktionen

getroffen werden.

Im Gegensatz zu bekannten Verkehrssimulationsein-richtungen (DE-PS 32 12 019, DT-AS 24 20 773 und DE-PS 32 15 672) wird nicht ein bestimmter Prüfablauf fest vorgegeben, sondern jede nur denkbare Teilnehmeraktion ist zu jedem Zeitpunkt möglich und das tatsächliche Auftreten der Teilnehmeraktion zu einem bestimmten Zeitpunkt wird durch Ver-wendung von zufallsabhängigen Entscheidungen, ent-sprechend dem für jede Entscheidung frei vorgebbaren Verteilungsfunktionstyp, gesteuert.

Dies hat zur Folge, daß auch sämtliche neuen Leistungsmerkmale z.B. einer Nebenstellenanlage ihrem Verkehrsanteil entsprechend beliebig nachgebildet werden können (z.B. Rufwiederholung, Kurzwahl usw.) und eine Vielfalt von Teilnehmerverhalten, wie z.B. Wahlabbruch für unterschiedliche Teilnehmergruppen, definiert werden kann. Die aufgebauten Verbindungen unterliegen also keinem festen, vorgegebenen Prüfablauf, sondern entsprechen den in der Realität vorkommenden Ereignissen (wirklichkeitsnahe Nachbildung), welche sich mit Hilfe statistischer Gesetzmäßgkeiten beschreiben lassen.

Vorteilhafte Ausgestaltungen der Erfindung sind in den Unteransprüchen angegeben.

Die Erfindung wird nachstehend anhand einer in der Zeichnung dargestellten Ausführungsform näher beschrieben und erläutert. Es zeigt:

Fig. 2 den typischen zeitlichen Verlauf eines instationären Verkehrsangebots, z.B. während eines Tages oder kurzfristige Überlast,

Fig. 3 das Blockschaltbild (Hardware) der erfindungsgemäßen Verkehrssimulationseinrichtung und

Fig. 4 die softwaremäßige Funktionsaufteilung (Softwarestruktur, Datenstruktur, Kommunikationsstruktur durch Meldeaustausch) der erfindungsgemäßen Verkehrssimulationseinrichtung.

Fig. 2 zeigt den typischen Verlauf einer instationären Ankunftsrate des Überlastverkehrs. In der Verkehrssimulationseinrichtung kann ein solcher Verlauf nachgebildet werden, wobei gemäß der Erfindung die Teilnehmernachbildungen ähnlich wie ein realer Teilnehmer reagieren und ihr Verhalten in Abhängigkeit von der Systemreaktion ändern. Der Zusammenschluß aus Vermittlungsanlage und Verkehrssimulationseinrichtung gemäß der Erfindung verhält sich somit ähnlich wie ein geschlossener Regelkreis.

Beim Nachbilden der einzelnen Teilnehmerreaktionen können zwei Fälle hinsichtlich der vorgegebenen Ankunftsrate unterschieden werden:

a) Ankunftsrate ist konstant
b) Ankunftsrate ist zeitabhängig

a) Die Reaktion der Teilnehmer auf Systemreaktionen entspricht den in der Realität auftretenden

- 13 -

Verhältnissen bezüglich eines ungestörten Gesprächsaufbaus. Dies bedeutet, daß der rufende Teilnehmer (A-Tln) seine Gesprächsaufbauphase ohne Auswirkungen auf die Ankunftsrate durchläuft. Die einzelnen Reaktionen sind zufallsabhängig, wobei der Ereignis-Abstand statistisch vorgebbaren Verteilungsfunktionen oder deterministisch vorgebbaren Zeitabständen gehorcht. Anhand von Belegungsspektren kann die Wahrscheinlichkeit für das Auftreten einer bestimmten Belegungsart (keine Wahl, unvollständige Wahl) und die dazugehörende mittlere Belegungsdauer angegeben werden. Beispielsweise legt der rufende Teilnehmer mit einer bestimmten Wahrscheinlichkeit vorzeitig auf (Wahlabbruch); oder er beginnt mit einer bestimmten Wahrscheinlichkeit zu wählen bevor er den Wählton erhält; oder die einzelnen Zeitabstände zwischen den zu wählenden Ziffern genügen einer Verteilungsfunktion mit jeweils unterschiedlichen Mittelwerten; oder er besitzt eine, durch eine Verteilungsfunktion vorgebbare Wartegeduld, mit der er sich den Freiton anhört um dann z.B. ohne in die Gesprächsphase einzutreten die Verbindung wieder abbaut usw.

Die Nachbildung des gerufenen Teilnehmers (B-Tln) erfolgt anhand von vorgebbaren Wahrscheinlichkeiten dafür, z.B. daß er das Gespräch überhaupt annimmt, daß er eine bestimmte Zeit wartet bis er das Gespräch annimmt, daß er das Gespräch eine bestimmte Zeit führt und/oder daß ein entgegengenommenes Gespräch auf einen dritten Teilnehmer (C-Tln) innerhalb einer Nebenstellenanlage umgelegt wird usw..

Die einzelnen Reaktionen des rufenden und des gerufenen Teilnehmers sind abhängig von der jeweiligen Systemreaktion. So zeigt der rufende Teilnehmer ein anderes Teilnehmerverhalten, z.B. Wählverhalten, wenn er zu wählen begonnen hat, ohne auf den Wählton zu warten. In diesem Fall werden die ersten gewählten Ziffern von der Vermittlungsanlage nicht erkannt und der Teilnehmer erhält bereits innerhalb seines Wahlvorgangs (Wählen der gesamten Rufnummer) den Besetztton oder ein anderes Besetztzeichen von der Vermittlungsanlage signalisiert. Eine Veränderung des Teilnehmerverhaltens in Abhängigkeit von der Systemreaktion bedeutet, daß er auf diese Signalisierung reagiert, indem er die Wahl abbricht und evtl. sofort einen neuen Wahlversuch unternimmt oder er setzt seine Wahl fort, um dann nach dem Wählen der gesamten Rufnummer den Hörer sofort aufzulegen usw..

b) Die Reaktionen der Teilnehmer auf Systemreaktionen sollen den unter a) beschriebenen Reaktionen entsprechen. Die Ankunftsrate $\lambda$ ist zusätzlich eine Funktion der Zeit. Diese Zeitabhängigkeit kann aus zufallsabhängig vorgebbaren Verteilungsfunktionen (z.B. entsprechend dem verallgemeinerten Poisson-Prozeß, usw.) oder deterministisch vorgebbaren Lastprofilen entnommen werden. So sind die Zeitabstände für das Ankunftsereignis beispielsweise mit zeitabhängigen Verteilungsfunk-

tionen (Tran-Gia, P., "Überlastprobleme in rechnergesteuerten Fernsprechvermittlungssystemen - Modellbildung und Analyse", 36. Bericht über verkehrstheoretische Arbeiten, Institut für Nachrichtenvermittlung und Datenverarbeitung, Universität Stuttgart, 1982) beschreibbar.

Eine andere Art der Erhöhung der Ankunftsrate $\lambda$, die systemrückwirkungsbedingte, dynamische Angebotserhöhung, ergibt sich beispielsweise dadurch, daß der Teilnehmer auf Systemreaktionen nervös reagiert. Meldet sich der gerufene Teilnehmer nicht, so kann der rufenden Teilnehmer nun versuchen, diesen Teilnehmer unter allen ihm als sinnvoll erscheinenden Rufnummern aufzufinden. Er wird nun nacheinander alle diese Rufnummern immer wieder anwählen, bis er diesen Teilnehmer erreicht.

Die Festlegung der einzelnen Teilnehmerbelegungsspektren erfolgt unter Zugrundelegung eines endlichen Automaten für jeden Teilnehmer und kann durch eine SDL-ähnliche Beschreibungssprache spezifiziert und mit höheren Programmiersprachen programmiert werden. Die Beschreibung des Teilnehmerverhaltens mit Hilfe von Ereignisketten (Wizgall, M., "Über Architektur, Betriebsweise und Verkehrsverhalten einer rechnergesteuerten Vermittlungsstelle", 27. Bericht über verkehrstheoretische Arbeiten, Institut für Nachrichtenvermittlung und Datenverarbeitung, Universität Stuttgart 1980) oder mit Hilfe von endlichen Automaten (Tran-Gia, P., "Überlastprobleme in rechnergesteuerten Fernsprechvermittlungssystemen - Modellbildung und Analyse", 36. Bericht über verkehrstheoretische Arbeiten, Institut für Nachrichtenvermittlung und Datenverarbeitung, Universität Stuttgart, 1982) findet Anwendung in der Modellbildungstechnik zur verkehrstheoretischen Systemuntersuchung. Programmänderungen und Programmerweiterungen sind auf einfache Art durchführbar, wobei dabei jede Teilnehmerreaktion berücksichtigt werden kann. Dadurch können (parametrisierte) Teilnehmerverhaltensprofile für

- Telefonteilnehmer, angeschlossen an eine Nebenstellenanlage
- Operatorplätze innerhalb einer Nebenstellenlage
- Telefonteilnehmer, angeschlossen an eine Ortsvermittlungsstelle
- Nebenstellenanlagen, angeschlossen an eine Ortsvermittlungsstelle
- Digitale Teilnehmereinrichtungen, angeschlossen an eine Nebenstellenanlage
- Digitale Teilnehmereinrichtungen, angeschlossen an eine Ortsvermittlungsstelle
- Amtsleitung, angeschlossen an eine Nebenstellenanlage
- Fernsprechleitungen und/oder Signalisierungskanäle einer Durchgangs-Vermittlungsstelle
- Digitale Teilnehmereinrichtung von bestehenden und zukünftigen Kommunikationssystemen

auf einfache Art und Weise spezifiziert und implementiert werden.

Jede einzelne Teilnehmerreaktion und Systemreaktion sowie der zeiliche Abstand zwischen Teilnehmerereignis und/oder Systemereignis kann statistisch ausgewertet werden. Die Auswertung kann hierbei auf bestimmte Teilnehmeraktionen, auf einen bestimmten Teilnehmer, auf Systemreaktionen, auf das Unter- oder Überschreiten von gewissen Zeitabständen usw. bezogen werden. Als Ergebnis der Teilnehmersimulation liegen also nicht nur Fehlerprotokolle über einen bestimmten Hard- oder Software-Fehler bei einer bestimmten Gesprächs-Aufbau-/ Abbauphase vor, sondern es werden auch simulativ Meßwerte ermittelt, welche Aussagen zulassen über:

- tatsächlich eingestellte Ankunftsrate (je Teilnehmer, je Teilnehmergruppe usw.)
- Anzahl der Rufwiederholungen aufgrund der Rückmeldung "Teilnehmer - belegt", interne Blockierung der Vermittlungsstelle, usw.
- Anzahl der tatsächlich geführten internen/ externen - Gespräche

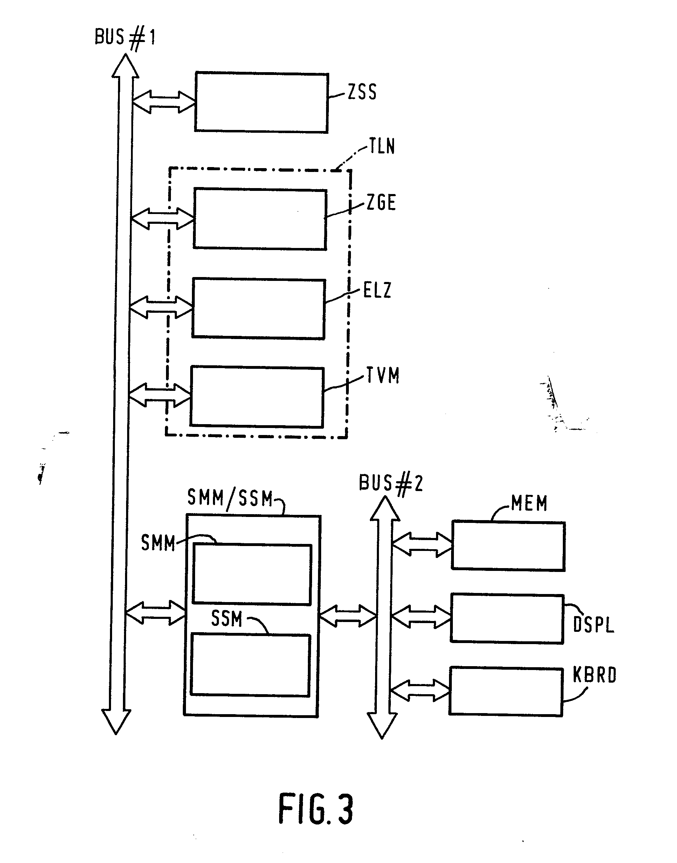

Bei der Verkehrssimulation ist es dabei nicht von Bedeutung, ob ein Rufvorgang eines bestimmten Teilnehmers durch Hard- oder Softwarefehler der Vermittlungsstelle in seinem Ablauf gestört war, sondern der Fehler wird statistisch erfaßt. Auf die Störung reagiert die Teilnehmernachbildung (TLN in Fig. 3) wie ein realer Teilnehmer auf dieses Ereignis.

Mittels der erfindungsgemäßen Verkehrssimulationseinrichtung kann nicht nur ein Lasttest sondern
auch ein Funktionstest, d.h. die gezielte Einstellung jedes Zustand der Vermittlungsanlage, durchgeführt werden. Beispielsweise kann speziell der
Zustand "Tln i führt Rückfragegespräch" und "Tln j
führt Externgespräch" und "eine Anzahl k von Teilnehmern führen Interngespräche" hergestellt und
ausgehend hiervon ein neuer Gesprächsaufbau getestet werden. Wegen der Vielzahl von möglichen Systemzustände wird hier vorzugsweise ein statistischer Test durchgeführt, d.h. es wird nur eine begrenzte Anzahl von möglichen Systemzustände überprüft und aus deren Fehlerfreiheit mit einer Voraussagewahrscheinlichkeit auf die Fehlerfreiheit
in allen Systemzuständen geschlossen.

In Fig. 3 ist die erfindungsgemäße Verkehrssimulationseinrichtung UNES (UNES: Universal Environment
Simulator) in der Form eines Blockschaltbildes
dargestellt. Die Verkehrssimulationseinrichtung
UNES enthält eine programmgesteuerte Steuereinrichtung SMM/SSM, Teilnehmer- und/oder Leitungsnachbildungen TLN und eine Anschlußeinheit ZSS,
welche miteinander über ein Bussystem 1 verbunden
sind. Die Teilnehmer-Nachbildung TLN ist unterteilt in eine erste Einrichtung TVM zur Erzeugung
des Teilnehmerverhaltens, in eine zweite Einrichtung ELZ zur Verwaltung der Ereignisliste und der
Zeit zwischen zwei Ereigniszeitpunkten und eine
dritte Einrichtung ZGE zur Erzeugung von Zufallsgrößen. Je nach Leistungsfähigkeit der einzelnen

- 19 -

Einrichtungen können die genannten Funktionen in einer Einrichtung zusammengefaßt oder auch noch in weitere Einrichtungen unterteilt werden.

In der programmgesteuerten Steuereinrichung SMM/ SSM erfolgt neben der Steuerung des Testablaufs der Verkehrssimulationseinrichtung UNES auch die statistische Auswertung der Meßergebnisse. An die programmgesteuerte Steuereinrichtung SMM/SSM sind Massenspeicher, Drucker und ein Bediengerät anschließbar. Mittels dieser Einrichtungen wird die Verkehrssimulationseinrichtung UNES durch den Benutzer entsprechend des vorgesehenen Simulationsablaufes programmiert. Die Programmierung umfaßt z.B. die Spezifikationen der Verteilungsfunktionen, der Teilnehmeranzahl, der Rufnummernbereiche. Mit Hilfe der programmgesteuerten Steuereinrichtung SMM/SSM kann über die Anschlußeinheit ZSS der an die Verkehrssimulationseinrichtung UNES angeschlossene Prüfling (Vermittlungsstelle, Nebenstellenanlage usw.) konfiguriert und aus den angeschlossenen Massenspeichern die Vermittlungssoftware des Prüflings geladen werden.

In der ersten Einrichtung TVM wird das eigentliche Teilnehmerverhalten mit Hilfe eines endlichen Automaten nachgebildet. Bei der Nachbildung kann davon ausgegangen werden, daß jeder Teilnehmer sich zu jedem Zeitpunkt in einem definierten Zustand befindet, aus welchem er durch eine Systemreaktion (Signalisierung eines Ereignisses der Vermittlungsanlage) oder durch Teilnehmerreaktion (Mel-

- 20 -

- 20 -

dung des nächsten Ereigniszeitpunktes von der zweiten Einrichtung ELZ) in einen nachfolgenden, wiederum definierten Zustand übergeht.

In der zweiten Einrichtung ELZ werden die Ereigniszeitpunkte für die jeweiligen zugehörigen simulierten Teilnehmer und/oder Leitungen verwaltet. In der dritten Einrichtung ZGE werden alle Zufallsgrößen für UNES erzeugt. Die Zufallsvariablen können gleichverteilt sein oder entsprechend einer programmierbaren Verteilungsfunktion vorgegeben werden.

Die Erzeugung von Zufallsvariablen mit beliebiger Verteilungsfunktion geschieht in der Verkehrssimulationseinrichtung UNES mit Hilfe diskreter Hardware-Bausteine und wird in zwei Schritten durchgeführt:

Zunächst wird eine Zufallszahl erzeugt, die im halboffenen Intervall $[0,1)$ gleichverteilt ist. Diese sogenannte Basiszufallszahl wird dann durch Transformation an der vorgegebenen Verteilungsfunktion in die eigentliche Zufallsvariablen abgebildet (Fishman, G.S.:" Principles of Discrete Event Simulation" John Wiley, New York, 1978).

Die erzeugten Zufallszahlen sind sogenannte Pseudo-Zufallszahlen, da sie nach einem deterministischen und damit reproduzierbaren Verfahren erzeugt werden.

- 21 -

Zwei prinzipielle Verfahren können zur Erzeugung der Basiszufallszahl verwendet werden:

1. Schieberegister-Sequenzen (M-Sequenzen)

Ein binäres Schieberegister der Länge n Bits wird so rückgekoppelt, daß sich eine "Maximal-Sequenz (M-Sequenz)" der Länge $2^n-1$ ergibt, (Golomb, S.W.: "Shift Register Sequences", Holden Day, San Francisco, 1967). Aus dem Schieberegister kann der Inhalt einer Bitstelle als gute Realisierung einer Zufallszahl mit den beiden gleichwahrscheinlichen Werten 0 und 1 entnommen werden.

Für die Erzeugung einer k-Bit-Zufallsdualzahl mit dem Wertebereich 0 ... $2^k-1$ können z.B. k Schieberegister mit unterschiedlicher Sequenz oder unterschiedlicher Sequenzlänge, die modulo 2 Verknüpfung von Sequenzen oder ähnliche Verfahren verwendet werden, die die statistische Unabhängigkeit der k Bits voneinander gewährleisten.
Die k-Bit-Zufallsdualzahl wird durch Division durch $2^k$ auf den o.g. Wertebereich (0,1) der Zufallszahl normiert. Die Länge k der Zufallsdualzahl ergibt die Auflösung (Rasterung) $2^{-k}$ der Zufallszahl.

2. Multiplikativ-additives Verfahren.

Das Verfahren erzeugt eine neue k-Bit-Zufallsdualzahl $X_{i+1}$ aus der alten nach dem Bildungsgesetz

$$X_{i+1} = (\lambda \cdot X_i + c) \bmod p.$$

0184883

- 22 -

Es benötigt die arithmetischen Operationen Modulo-Bildung, Addition und Multiplikation; diese jedoch nur einmal je neuer Zufallsdualzahl. Für einige wenige Werte von $\lambda$, c und p ergeben sich ausreichend wenig autokorrelierte Zufallsdualzahl-Folgen (Knuth,D.E.:" The Art of Computer Programming" Vol.2. Addison-Wesley, Reading, Massachusetts, 1981).

In der Verkehrssimulationseinrichtung UNES werden die gleichverteilten Zufallsgrößen (Basiszufallszahlen) mit Hilfe der multiplikativen Kongruenzmethode ermittelt (Ide H.D., Sägebarth J., "On Properties of Random Number Generators and their Influence on Traffic Simulation", Proc. 10th International Teletraffic Congress, Montreal 1983, paper 2.4.6). Die Realisierung kann mit diskreten Hardware-Bausteinen oder programmgesteuert (z.B. Mikroprozessorsteuerung) erfolgen. Werden Zufallsvariablen mit Hilfe diskreter Hardware-Bausteine erzeugt, so wird hierfür im Vergleich zu der programmgesteuerten Erzeugung eine wesentlich geringere Zeit benötigt. Andererseits weist die programmgesteuerte Erzeugung den Vorteil auf, daß die Implementierung flexibler erfolgen kann. In der Verkehrssimulationseinrichtung UNES werden die Basiszufallszahlen mit Hilfe diskreter Hardware-Bausteine generiert und durch einen nachgeschalteten RAM-Speicher in die gewünschte Verteilungsfunktion transformiert. Die Anzahl der so erzeugbaren Verteilungsfunktionen und Mittelwert-Skalierungs-Multiplikationen (Fishman, G.S. "Principles of

- 23 -

Discrete Event Simulation", John Wiley, New York,
1978) ist prinzipiell unbegrenzt. Sie wird nur von
dem hierfür benötigten Speicheraufwand begrenzt.

Über die Anschlußeinheit ZSS erfolgt der Austausch
der vermittlungstechnischen Ereignisse zwischen
der Verkehrssimulationseinrichtung UNES und der zu
testenden Vermittlungsanlage. Die Anschlußeinheit
ZSS kann dabei so ausgebildet werden, daß an den
Sprechadern (a-Ader, b-Ader) eines Teilnehmeranschlusses oder an den Eingängen einer Ortsverbindungsleitung/Fernverbindungsleitung (je nach
Durchschalteart 2 bis 6-adrig) oder an den Eingängen einer Wählergruppe (3-adrig) oder direkt an
der steuerlogischen Ebene der Vermittlungsanlage
(Zentralsteuerung) die vermittlungstechnischen Ereignis-Meldungen (ggf. nach Analog/Digital-Wandlung) ausgetauscht werden. Der Anschluß der Verkehrssimulationseinrichtung UNES bei volldigitalen
Datennetzen kann entsprechend an jeder steuerlogischen Ebene erfolgen.

Bei Ankopplung an die steuerlogische Ebene (interne Schnittstelle) der Vermittlungsanlage kann der
schaltungstechnische Aufwand für den Anschluß
einer Vielzahl von Teilnehmern oder Leitungen erheblich verringert werden. In diesem Fall werden
alle Ereignis-Meldungen zwischen dem Teilnehmersimulator und der an die Verkehrssimulationseinrichtung UNES angeschlossenen Vermittlungsanlage über
eine oder mehrere mit geringem Schaltungsaufwand
zu realisierende, digitale Schnittstellen ZSS ausgetauscht.

Durch die beiden Möglichkeiten des Anschlusses an die Teilnehmerleitungen bzw. Verbindungsleitungen oder an die steuerlogische Ebene kann die Verkehrssimulationseinrichtung UNES als

a) zusätzliche Anschaltung (zusätzliche Last) an eine bereits in Betrieb genommene Vermittlungsanlage

b) als vollständige Nachbildung der Verkehrsumwelt (alle Teilnehmer, Verbindungsleitungen einer Ortsvermittlungsstelle, Fernvermittlungsstelle, Nebenstellenanlage usw.)

betrieben werden. Im Fall a) wird hier bereits von real vorhandenen Teilnehmern eine Grundlast erzeugt. Mit Hilfe der Verkehrssimulationseinrichtung UNES können nun weitere simulierte Teilnehmer an die Vermittlungsanlage angeschaltet werden und die Auswirkungen der nun neu eingebrachten Last auf die Vermittlungsanlage untersucht werden (z.B. Messungen von Wähltonverzug, Ruftonverzug, innerer Blockierung usw.). Darüber hinaus können die bei einer bestehenden Vermittlungsanlage in der Realität auftretenden Lastprofile von realen Teilnehmern gemessen und abgespeichert werden. Hierzu werden von der Verkehrssimulationseinrichtung UNES keine vermittlungstechnische Anreize beim Meßvorgang an die Vermittlungsanlage übermittelt oder empfangen. Die von der Vermittlungsanlage zu verarbeitenden Anreize der realen Teilnehmer werden von der Vermittlungsanlage zur Verkehrssimulationseinrichtung UNES gemeldet, dort statistisch ausgewertet und das Ergebnis z.B. auf einem Massenspeicher abgespeichert. Die abgespeicherten Daten können nun als Vorgabe für die Ankunftsrate, Enderate, Wahlaufbau-/Wahlabbau-Phase oder dergleichen bei der Simulation in der Verkehrssimulationseinrichtung UNES verwendet werden. Damit können für alle an eine Vermittlungsanlage anschließbaren Teilnehmer zeitverknüpfte Lastprofile, welche z.B. bei bereits in Betrieb genommenen Vermittlungsanlagen zum Überlastfall führen und möglicherweise zum Abschalten der Vermittlungsanlage führen, zum Austesten von Verbesserungen im Prüffeld (Labor) beliebig oft wiederholt werden.

Im Fall b) wird mit Hilfe der Verkehrssimulationseinrichtung UNES eine wirklichkeitsnahe Teilnehmergrundlast auf die Vermittlungsanlage aufgeschaltet. Mittels einiger weniger an die Vermittlungsanlage bereits angeschlossener Teilnehmer können nun neue spezielle Leistungsmerkmale der Vermittlungsanlage unter annähernd realen Umweltbedingungen im Prüffeld ausgetestet werden und dann fehlerfrei in bestehende Vermittlungsanlagen übernommen werden.

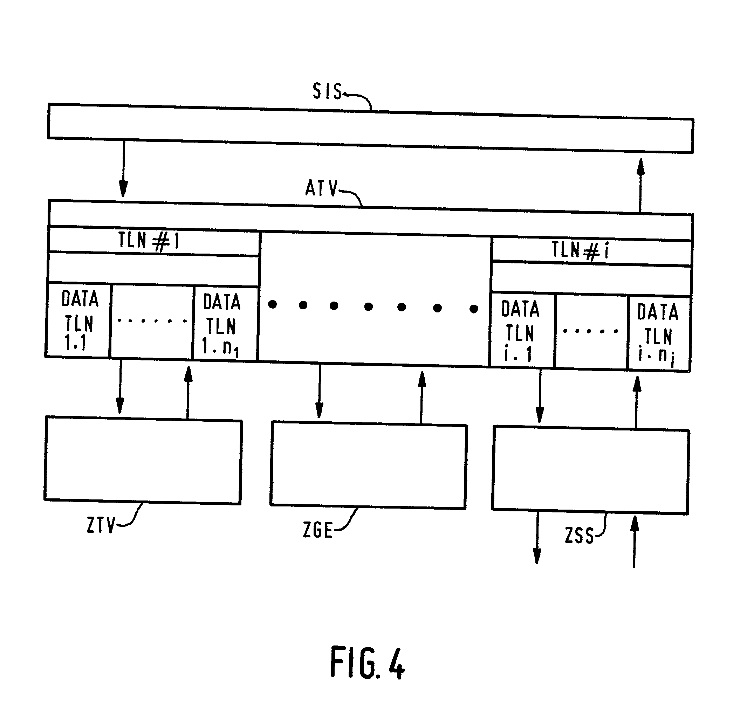

Fig. 4 zeigt eine Ausführungsform für die Funktionsaufteilung von Programmodulen (Teilprogramme) auf die einzelnen Einrichtungen der in Fig. 3 dargestellten Verkehrssimulationseinrichtung UNES. In

0184883

Fig. 4 sind nur die wichtigsten fünf Module dargestellt, nämlich das Modul Simulationsablaufsteuerung SIS, das Modul Automaten für Teilnehmerverhalten ATV, das Modul Zeit-Verwaltung ZTV, das Modul
Zufallsgrößen-Erzeugung ZGE und das Modul Zielsystem-Schnittstelle ZSS.

Durch das Modul SIS werden für einen Simulationslauf alle anderen Module nach entsprechender Benutzervorgaben initialisiert, der Simulationslauf
gestartet, überwacht, beendet und die während
eines Simulationslaufes gewonnenen Meßdaten zwischengespeichert und aufbereitet. Die Steuerung
eines Simulationslaufes erfolgt hierbei über SIS-
ATV-Meldungen. Die während eines Simulationslaufes
entstehenden Meßdaten werden vom Modul ATV an das
Modul SIS durch ATV-SIS bzw. ZSS-SIS-Meldungen zur
Zwischenspeicherung übergeben. Diese Meßdaten entstehen durch Systemreaktion oder Teilnehmerreaktionen, welche im ATV-Modul bestimmte Zustandsübergänge bewirken. Die Automaten im ATV-Modul zur
Nachbildung des Teilnehmerverhaltens können in unterschiedliche Teilnehmer-Typen, wie z.B. Amtsleitungen, Nebenstellenteilnehmer, Operatorplätze,
usw. unterteilt werden. Jeder Typ ist hierbei
durch seine zugehörigen Programm- und Daten-Bereiche charakterisiert.

Die Nachbildung des zeit- und zufallsabhängigen
Teilnehmerverhaltens im Modul ATV wird durch die
Module ZTV und ZGE unterstützt. Für die Festlegung
der Teilnehmeraktion, z.B. auf eine Systemreak-

0184883

tion, werden die benötigten Zufallsgrößen durch eine ATV-ZGE-Meldung angefordert und durch eine ZGE-ATV-Meldung beantwortet. Aufgrund dieser Zufallsgrößen wird nun z.B. der Zeitpunkt für die nächste Teilnehmeraktion ermittelt. Dieser Zeitpunkt wird durch eine ATV-ZTV-Meldung an das ZTV-Modul übergeben. Das ZTV-Modul verwaltet die absoluten Simulationszeitpunkte und teilt durch ZTV-ATV-Meldungen dem ATV-Modul mit, daß nun ein bestimmter Teilnehmer eine bestimmte Teilnehmeraktion durchzuführen hat. Diese wird im ATV-Modul mittels einer Transition im jeweiligen Automaten für das Teilnehmer-Verhalten ausgeführt und durch eine ATV-ZSS-Meldung an das Modul ZSS gemeldet. Das Modul ZSS übernimmt nun die Signalisierung der Teilnehmer-Aktion an das Zielsystem entsprechend der logischen und physikalischen Ankopplung an das Zielsystem. Systemreaktionen werden entsprechend von dem Modul ZSS an das Modul ATV mit Hilfe von ZSS-ATV-Meldungen weitergeleitet. Mit Hilfe von ZSS-SIS-Meldungen können absolute Simulationszeitpunkte an das Modul ZSS für eine statistische Auswertung für alle Meldungen übergeben werden, welche durch das Modul ZSS von dem Zielsystem empfangen, bzw. an das Zielsystem gesendet werden. Diese ZSS-SIS-Meldungen werden durch das Modul ATV an das Modul SIS weitergegeben. Dadurch ist es möglich, Zeitmessungen unabhängig von der internen Bearbeitungsgeschwindigkeit der Umweltsimulationseinrichtung UNES und mit einer Auflösung von z.B. 1 msec durchzuführen.

Für die Durchführung von Zeitmessungen werden bestimmte Meldungen mit einem Datum versehen. Beispielsweise können die absoluten Simulationszeitpunkte zu denen ATV-ZSS-Meldungen an das Modul ZSS übergeben werden von dem Modul ATV festgehalten und an das Modul SIS übergeben werden. Weiterhin können in dem Modul ZSS die absoluten Simulationszeitpunkte der an die zu testende Vermittlungsanlage gesendeten und empfangenen Meldungen erfaßt und an das Modul SIS übergeben werden. Aus dem Vergleich der beiden Zeitpunkte miteinander im Modul SIS ist die interne Laufzeit in der Verkehrssimulationseinrichtung UNES ablesbar, wodurch der wichtige Vorteil der Eigenüberwachung erhalten wird.

Philips Patentverwaltung GmbH          PHD 84 338 EP
N.V. Philips'Gloeilampenfabrieken       25.09.1985


Patentansprüche

1. Verkehrssimulationseinrichtung zum Testen von Vermittlungsanlagen, welche das Verhalten von an die Vermittlungsanlage angeschlossenen Teilnehmern und/oder Leitungen nachbildet und welche zur Erzeugung von Zufallsvariablen wie Anrufabstände, Gesprächsdauern und Reaktionszeiten und zur Steuerung des Testlaufs eine mit den Teilnehmernachbildungen und/oder Leitungsnachbildungen verbundene programmgesteuerte Steuereinrichtung aufweist, die die Reaktion der Vermittlungsanlage überprüft und/oder die vermittlungstechnischen statistischen Parameter mißt, dadurch gekennzeichnet, daß das jeweilige Verhalten der angeschlossenen Teilnehmer und/oder Leitungsnachbildungen nicht deterministisch vorbestimmt wird, sondern sich zufallsabhängig den Systemreaktionen anpaßt.

2. Verkehrssimulationseinrichtung nach Anspruch 1, dadurch gekennzeichnet, daß die Teilnehmer- und/oder Leitungsnachbildungen (TLN) aus einer ersten Einrichtung (TVM) zur Nachbildung des Teilnehmerverhaltens, zweiten Einrichtung (ELZ) zur Festlegung von Ereignis-Zeitpunkten und einer dritten Einrichtung (ZGE) zur Erzeugung von Zufallsvariablen bestehen.

3. Verkehrssimulationseinrichtung nach Anspruch 2, dadurch gekennzeichnet, daß die erste Einrichtung (TVM) das Teilnehmerverhalten mit Hilfe eines endlichen Automaten nachbildet, in welchem implizit die Reaktionen der angeschlossenen Vermittlungsanlage berücksichtigt werden.

4. Verkehrssimulationseinrichtung nach Anspruch 2, dadurch gekennzeichnet, daß mittels der zweiten Einrichtung (ELZ) für die jeweiligen Teilnehmer- und/oder Leitungen die zugehörigen Ereignis-Zeitpunkte welche von der ersten Einrichtung (TVM) ermittelt werden, verwaltet werden.

5. Verkehrssimulationseinrichtung nach Anspruch 2, dadurch gekennzeichnet, daß in der dritten Einrichtung (ZGE) die Erzeugung von gleichverteilten Zufallszahlen mit Hilfe der multiplikativen Kongruenzmethode mittels diskret aufgebauter Hardware erfolgt, daß dieser Hardware ein programmierbarer Speicher nachgeschaltet ist, mittels dem die gleichverteilten Basiszufallszahlen in eine Verteilungsfunktion transformiert werden.

6. Verkehrssimulationseinrichtung nach Anspruch 2, dadurch gekennzeichnet, daß in der Anschlußeinheit ZSS die absoluten Simulationszeitpunkte der an die zu testende Vermittlungsanlage gesendeten und von dieser empfangenen Meldungen festgehalten und an die Simulationssteuerung (SIS) übergeben werden, so daß interne Laufzeiten in der Verkehrssimulationseinrichtung selbst und zusätzlich Reaktionszeiten der zu testenden Vermittlungsanlage ohne die internen Laufzeiten der Verkehrssimulationseinrichtung gemessen werden können.

0184883

FIG.1

FIG. 2

1·Ⅲ·PHD 84–338

**FIG.3**

0184883

2-III-PHD 84-338

0184883

FIG. 4

3·III·PHD  84-338